# EUROPEAN PATENT APPLICATION

(11) **EP 0 982 936 A1**
(43) Date of publication of application: **01.03.2000**
(21) Application number: 99306554.9
(22) Date of filing: 19.08.1999
(51) Int. Cl.: H04N 5/208

(54) **Contour correction circuit for an image display apparatus**

(30) Priority: 28.08.1998 JP 24418198
(71) Applicant: ALPS ELECTRIC CO., LTD., Ota-ku Tokyo 145 (JP); SONY CORPORATION, Tokyo (JP)
(72) Inventor: Kamiko, Mitsuo, Kurokawa-gun, Miyagi-ken (JP); Seino, Kenichi, Kurokawa-gun, Miyagi-ken (JP)
(74) Representative: Kensett, John Hinton

(57) **Abstract**

An image display apparatus includes a contour correction circuit (10,11,12). The contour correction circuit (10,11,12) includes a first-stage delay unit (20) for generating a first-stage digital delay signal from an original digital signal, a second delay unit (21) for generating a second-stage digital delay signal delayed from the first-stage delay signal, an arithmetic unit (14) for generating a contour correction signal by subtracting the original signal from the first-stage digital delay signal while computing differences between the first stage delay signal and the second-stage delay signal and adding the differences, a contour-correction-signal amplifier unit (28) for amplifying the contour correction signal, and a combining unit (29) for combining the amplified contour correction signal with the first-stage delay signal. A delay adjustment means is provided to determine delays of the first and second delay units by using a clock signal adapted to the type of the input video signal.

## Description

The present invention relates to image display apparatuses suitable for a viewfinder connected to a television camera in order to adjust the picture framing and focusing.

Concerning this type of viewfinder, video-signal contour-correction circuits that increase resolution by enhancing the contour of a captured picture so that the picture can be clearly viewed are known. In general, the video-signal contour-correction circuits normally detect and amplify large time-based changes in a video signal and adds them to the original signal.

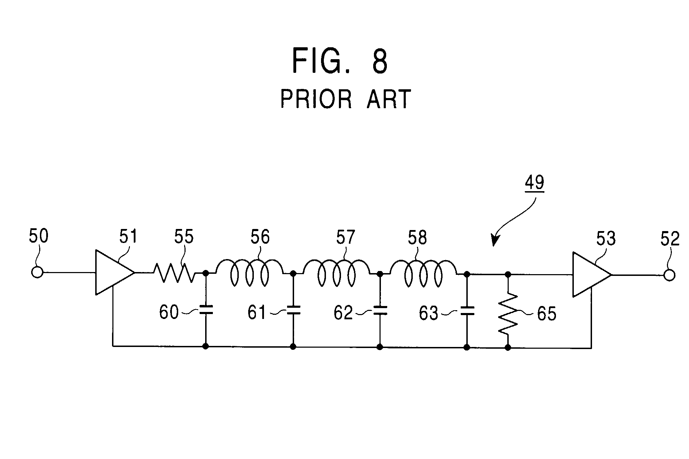

One of the video-signal contour-correction circuits is shown in Fig. 8. In the video-signal contour-correction circuit 49 shown in Fig. 8, a terminator 55, and inductors 56, 57, and 58, are connected in series between an amplifier 51 connected to an analog-video-signal input terminal 50 and an amplifier 53 connected to an output end 52. Capacitors 60, 61, 62, and 63, and a terminator 65, are connected so as to be in parallel with the terminator 55, and the inductors 56, 57, and 58.

In the video-signal contour-correction circuit 49, lowpass filters composed of the inductors 56, 57, and 58, and the capacitors 60, 61, 62, and 63 are connected at a plurality of stages between the amplifiers 51 and 53. The video-signal contour-correction circuit 49 generates delay signals based on the original analog video signal, and amplifies and adds the delay signals to the original analog video signal, whereby contours can be enhanced.

The video-signal contour-correction circuit 49 has lowpass filters connected at a plurality of stages, which have predetermined frequency bands. This structure in which a plurality of inductors and capacitors are used cannot be reduced in size and occupies a large area of the overall circuit. In the case where the video-signal contour-correction circuit 49 is provided in a compact apparatus, it is likely to be affected by spatial electromagnetic noise generated from a peripheral apparatus. Accordingly, an electromagnetic shielding structure must be employed in an apparatus including the video-signal contour-correction circuit 49, which increases costs.

An analog delay line composed of a plurality of inductors and capacitors cannot yield an accurate delay because the amount of delay varies depending on component precision. Also the inductors and capacitors cannot be reduced in size. Thus, the size of a delay line using the inductors and capacitors tends to increase. This makes it difficult to achieve size reduction.

In the case where the degree of amplification of each amplifier is increased in order to perform strong contour enhancement by the video-signal contour-correction circuit 49 shown in Fig. 8, each amplifier may behave as an oscillator, and the video-signal contour-correction circuit 49 is likely to be unstable.

Types of television video signal include the National Television System Committee (NTSC) system normally used in Japan, the Phase Alternation by line (PAL) system used in Europe, and high definition television systems. Video signals in accordance with these systems have different frequency bands. Thus, when the video-signal contour-correction circuit 49 shown in Fig. 8 performs contour enhancement, the amount of delay for contour enhancement differs for each system. Accordingly, three or four types of delay line are required to satisfy the video signal systems, which is likely to increase the cost, and there is an adverse effect in that the space necessary is large.

Accordingly, it is an object of the present invention to provide an image display apparatus adapted for various television systems that obtains an accurate delay and that easily provides stable and strong contour-enhancement effects. Since the image display apparatus is not significantly affected by electromagnetic noise, the need to use an electromagnetic shielding structure is reduced and the cost is reduced. The image display apparatus can be accommodated in an integrated circuit, together with other digital circuits, which achieves reduction in size and weight.

According to the present invention, the foregoing object is achieved through provision of an image display apparatus including a contour correction circuit that includes a first-stage delay unit for generating a first-stage digital delay signal from an original digital signal, a second delay unit for generating a second-stage digital delay signal delayed from the first-stage delay signal, an arithmetic unit for generating a contour correction signal by subtracting the original signal from the first-stage digital delay signal while computing differences between the first-stage delay signal and the second-stage delay signal and adding the differences, a contour-correction-signal amplifier unit for amplifying the contour correction signal, and a combining unit for combining the amplified contour correction signal with the first-stage delay signal.

Preferably, the image display apparatus includes a delay-adjustment unit for determining delays caused by the first-stage and second-stage delay unit by using a clock signal adapted for the type of an input video signal to be converted into the original signal.

The present invention will now be described, by way of example only, with reference to the accompanying drawings, in which:
Fig. 1 is a block diagram showing an image display apparatus according to the present invention;
Fig. 2 is a block diagram showing a contour correction circuit used in the image display apparatus shown in Fig. 1;
Fig. 3 is a waveform chart showing an original signal processed by the contour correction circuit, delay signals, and signals obtained by performing addition;
Fig. 4 is a block diagram showing a circuit arrangement in which a clock signal is used in a first-stage delay circuit and a second-stage delay circuit;
Fig. 5 is a block diagram showing an example of a D-type flip-flop circuit constituting a first-stage delay circuit;
Fig. 6 is a waveform chart showing the relationships of a clock signal with first-stage and second-stage delay signals generated by the circuit shown in Fig. 4;
Fig. 7 is a drawing showing the relationships among subtraction signals, an addition signal, and an amplification signal, which are processed for a purpose identical to that in the contour correction circuit shown in Fig. 2; and
Fig. 8 is a circuit diagram showing a conventional analog contour correction circuit.

Embodiments of the present invention are described below, but the present invention is not limited to the embodiments.

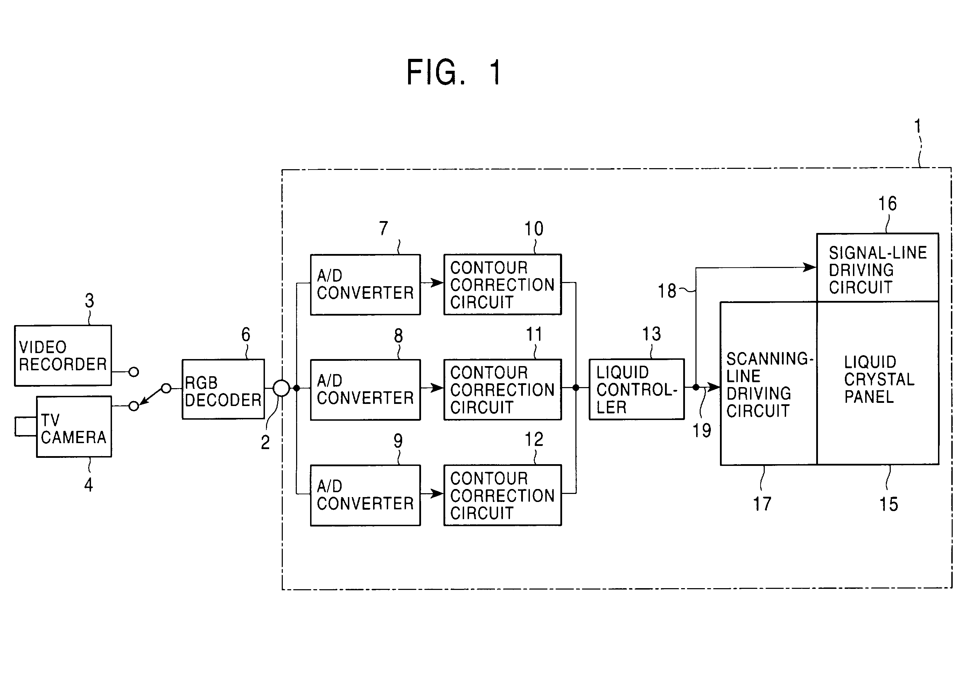

Fig. 1 shows a liquid crystal display apparatus (image display apparatus) 1 according to an embodiment of the present invention. The liquid crystal display apparatus (image display apparatus) 1 has an analog-RGB-signal input terminal 2. A video signal such as an NTSC signal output from a video recorder 3 or a TV camera 4 is converted into an analog RGB signal by an RGB decoder 6. The analog RGB signal is input to the input terminal 2.

Analog-to-digital (AID) converters 7, 8, and 9 are connected in parallel with the input terminal 2. The A/D converters 7, 8, and 9 respectively convert a red (R) component, a green (G) component, and a blue (B) component that compose the analog RGB signal input from the input terminal 2, into 8-bit digital original signals. The AID converters 7, 8, and 9 are connected to contour correction circuits 10, 11, and 12, and all the contour correction circuits 10, 11, and 12 are connected to a liquid crystal controller 13. The liquid crystal controller 13 is connected to a driving circuit for a liquid crystal panel 15.

More specifically, a signal-line driving circuit 16 and a scanning-line driving circuit 17 are connected to the liquid crystal panel 15. The liquid crystal controller 13 and the signal-line driving circuit 16 are connected by a connection line 18. The liquid crystal controller 13 and the scanning-line driving circuit 17 are connected by a connection line 19. Accordingly, by using a driving signal from the liquid crystal controller 13 to drive the signal-line driving circuit 16 and the scanning-line driving circuit 17, an image can be displayed on the liquid crystal panel 15.

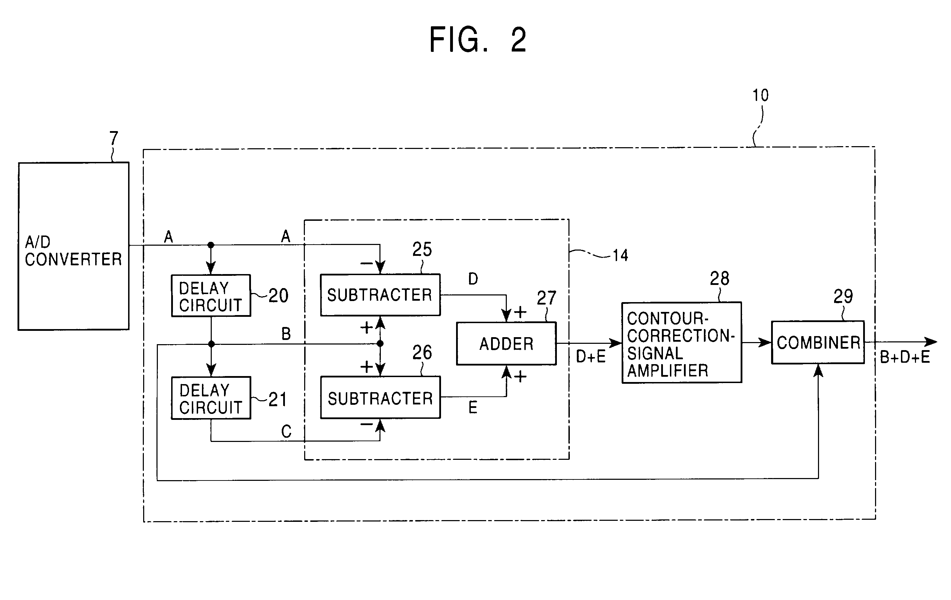

Since the contour correction circuits 10, 11, and 12 have the same structure, the contour correction circuit 10 shown in Fig. 2 is described below for brevity.

The contour correction circuit 10 includes a first-stage delay circuit 20 that generates a first-stage delay signal (denoted by reference alphabet B) when the 8-bit digital original signal (denoted by reference alphabet A) is input from the AID converter 7, and a second-stage delay circuit 21 that generates a second-stage delay signal (denoted by reference alphabet C) when the first-stage delay signal B is input from the first-stage delay circuit 20.

The contour correction circuit 10 also includes a first subtracter 25 that subtracts the 8-bit digital original signal A output by the AID converter 7 from the first-stage delay signal B output by the first-stage delay circuit 20, a second subtracter 26 that subtracts the second-stage delay signal C output by the second-stage delay circuit 21 from the first-stage delay signal B output by the first-stage delay circuit 20, an adder 27 that generates a contour correction signal by adding a subtraction signal from the subtracter 25 and a subtraction signal from the subtracter 26, a contour-correction-signal amplifier 28, and an combiner 29 that outputs, to the liquid crystal controller 13, the sum of an output from the contour-correction-signal amplifier 28 and the first-stage delay signal B. In this embodiment, the subtracters 25 and 26, and the adder 27 constitute an arithmetic unit 14.

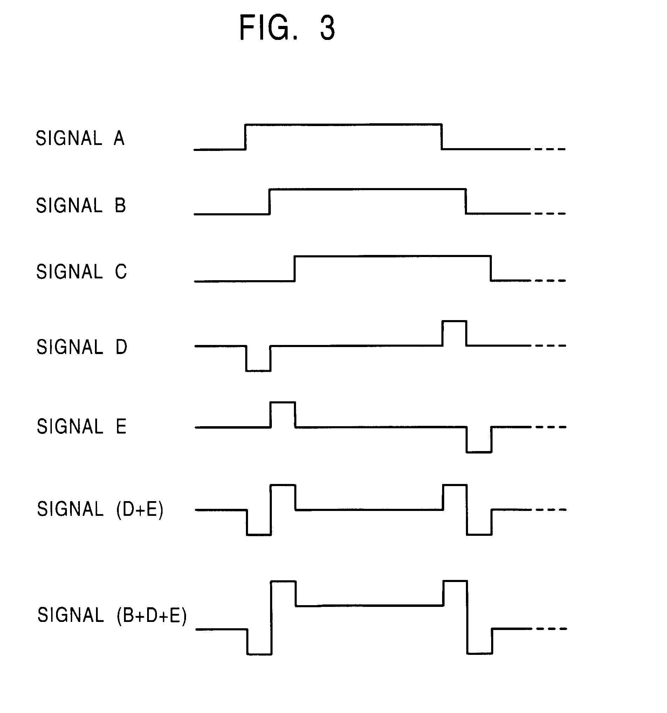

In Fig. 3, the signal output from each stage is described below.

In the case where the original signal A includes a rectangular wave as shown in Fig. 3, the first-stage delay signal B is a rectangular wave signal generated by delaying the original signal A for a predetermined time, and the second-stage delay signal C is a rectangular wave signal generated by delaying the first-stage delay signal B for a predetermined time. The first-stage subtraction signal obtained by subtracting the original signal A from the first-stage delay signal B is a rectangular wave signal D as shown in Fig. 3, which is represented by B-A=D. The second-stage subtraction signal obtained by subtracting the second-stage delay signal C from the first-stage delay signal B is a rectangular wave signal E as shown in Fig. 3, which is represented by B-C=E. The sum signal of the first-stage subtraction signal D and the second-stage subtraction signal E is a rectangular wave signal E as shown in Fig. 3, which is represented by D+E=(2B-A-C). The contour correction signal obtained by adding the signals D and E to the signal B is a signal represented by B+D+E as shown in Fig. 3. The contour-correction-signal amplifier 28 amplifies the contour correction signal B+D+E, a necessary number of times. In this embodiment, the contour correction signal B+D+E is amplified one time.

The comparison of the contour correction signal B+D+E with the first-stage delay signal B in Fig. 3 shows that the edges of a peak of the rectangular wave are enhanced.

Referring to image display on the liquid crystal panel 15, pixel contours can be sufficiently enhanced by enhancing a signal for each pixel adjacent to an arbitrary pixel of an image being displayed. Thus, it is preferable that signal delay for one pixel on an arbitrary pixel of an image being displayed is performed and the signal is amplified. Accordingly, by displaying, on the liquid crystal panel 15, an image corresponding to the waveform of the contour correction signal B+D+E in which the delay signal B for one rectangular wave of the original signal A is enhanced, image contour enhancement can be achieved.

In the contour correction circuit 10 in the above-described embodiment, the amount of signal delay from the original signal A must be accurately controlled. Accordingly, a circuit that utilizes a clock signal for driving the liquid crystal panel 15 in order to accurately control signal delay from the original signal A is described below.

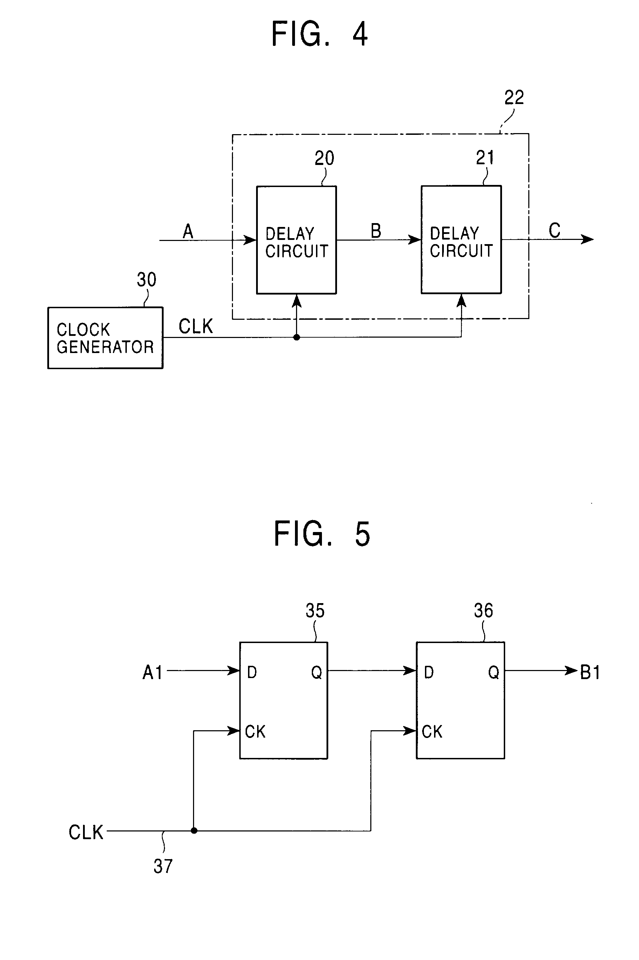

Fig. 4 shows an example of a delay-adjustment circuit 22 for generating an accurate delay signal by utilizing the clock signal. In the delay-adjustment circuit 22, the first-stage delay circuit 20 and the second-stage delay circuit 21 consist of flip-flops (described below). A clock signal CLK is input from the clock generator 30 to the first-stage delay circuit 20 and the second-stage delay circuit 21.

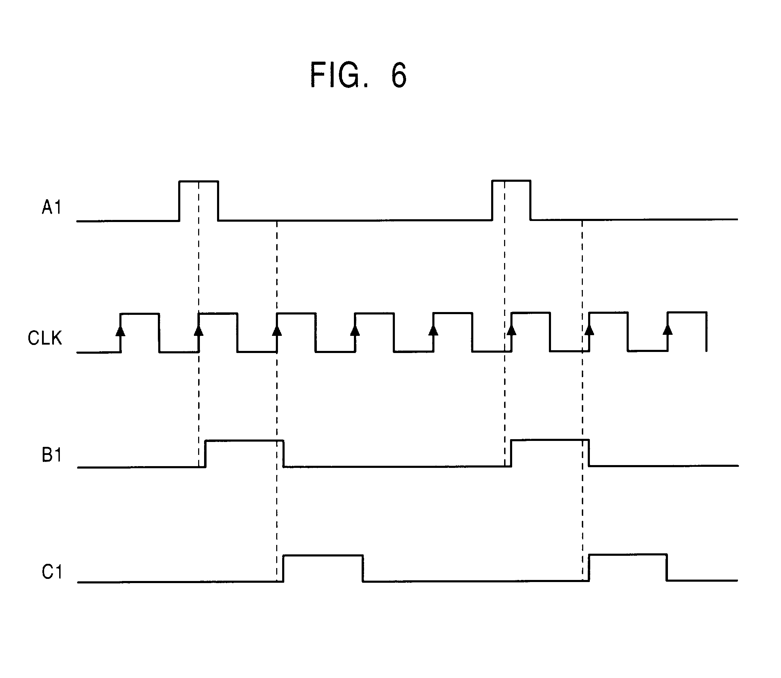

The first-stage delay circuit 20 is formed by connecting 1-bit D-type flip-flop circuits for, for example, eight bits. Each D-type flip-flop circuit consists of a D-type flip-flop formed by connecting flip-flops 35 and 36 as shown in Fig. 5, and an input line 37 connected to the D-type flip-flop circuit so that the clock signal is input to the D-type flip-flop. Although only a 1-bit D-type flip-flop circuit is shown in Fig. 5, 1-bit D-type flip-flop circuits necessary for a predetermined number of bits are actually provided. Also the second-stage delay circuit 21 has the same structure as the first-stage delay circuit 20.

Referring to Fig. 6, signal delay by a 1-bit D-type flip-flop circuit is described below.

In the case where an arbitrary rise of the clock signal CLK corresponds to a pulse of the 1-bit original signal A1, the first-stage delay signal B1 can be obtained by the D-type flip-flop circuit as the first-stage delay circuit.

In other words, when the original signal A1 is input, and one pulse of the original signal A1 is paid attention to, a pulse of the first-stage delay signal B1 is output at the pulse of the original signal A1. Accordingly, pulses of the delay signal B1 which include a time delay from a pulse of the original signal A1 to the rise of the clock signal CLK, and a circuit time lag, are output.

The D-type flip-flop circuit as the second-stage delay circuit 21 outputs pulses of the second-stage delay signal C1 at rises of the clock signal CLK so as to correspond to pulses of the first-stage delay signal B1. Thus, pulses of the second-stage delay signal C1 which include a delay to the next rise of the clock signal CLK, and a circuit time lag, can be obtained. Accordingly, it is understood that the first-stage delay signal B1 including a time delay accurately corresponding to the clock signal CLK, and the second-stage delay signal C1 including an accurate time delay for one clock, can be obtained.

By using the D-type flip-flop circuit and the clock signal CLK shown in Fig. 5 to generate the first-stage delay signal B1 and the second-stage delay signal C1, an accurate delay can be set so as to match the frequency of the clock signal CLK. Thus, if an input original signal differs depending on a television video signal system, an accurate delay which is adjusted to match the frequency of the clock signal and which is adapted for the television video signal system can be always obtained.

Since a clock signal in the NTSC system has a frequency of 36.5 MHz (normal)(threefold blank for the scanning mode), this clock signal CLK may be used. A clock signal in the HDTV system has a frequency of 37.125 MHz, and a clock signal in the PAL system has a frequency of 44.2 MHz (normal)(threefold blank for the scanning mode). Accordingly, when the present invention is applied to these systems, clock signals adapted for the systems are used. A horizontal scanning period in the NTSC system is 63.5 µs, a horizontal scanning period in the HDTV system is 32 µS, and a horizontal scanning period is 64 µS.

By using the clock signal adapted for each television video signal system, as described above, the clock signal for each system is used to set an accurate delay, even if television video signal systems differ. Thus, if the first-stage delay circuit 20 and the second-stage delay circuit 21 are used for any television system, an accurate delay in accordance with the clock frequency can be obtained.

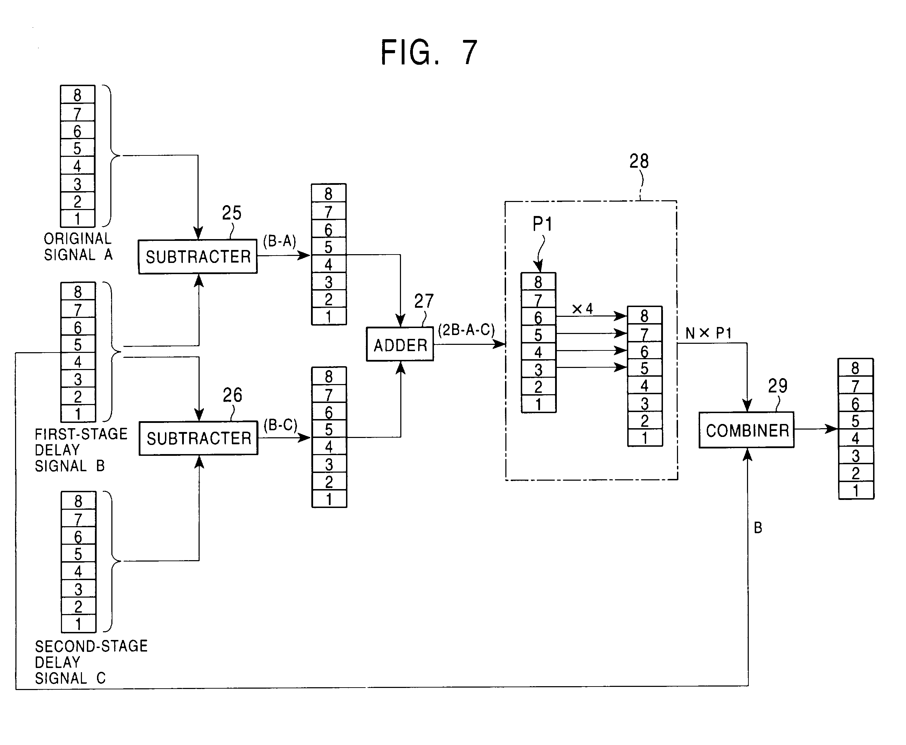

Fig. 7 shows a circuit for implementing digital amplification on the contour correction signal. In the circuit, an 8-bit digital signal A, a first-stage delay signal B, and a second-stage delay signal C, are processed similarly to the above-described embodiment so that subtraction and addition are performed. The processed signal is amplified to be N times greater, and the amplified signal is added to the first-stage delay signal B.

In Fig. 7, a circuit for generating the first-stage delay signal B and the second-stage delay signal C from the original digital signal A is equivalent to that shown in Fig. 2.

Equivalently to the contour correction circuit shown in Fig. 2, a subtracter 25 computes a first-stage subtraction signal B-A by subtracting the original digital signal A as 8-bit data from the first-stage delay signal B, and a subtracter 26 computes a second-stage subtraction signal B-C by subtracting the second-stage delay signal C from the first-stage delay signal B.

An adder 27 computes a contour correction signal (peaking signal) P1 represented by 2B-A-C by adding the subtraction signals B-A and B-C. In order to eliminate noise from the contour correction signal P1 as 8-bit digital data, lower 2 bits are excluded from the next processing, and an actual correction signal N×Pl is found by shifting two bits so that the remaining data is multiplied, for example, four times. An combiner 41 adds the actual correction signal NxPl to the first-stage delay signal B, and outputs it to the liquid crystal panel 15. Thereby, an image whose contour is enhanced to be four times greater can be displayed on the liquid crystal panel 15. Accordingly, in Fig. 7, a part of the circuit, denoted by reference numeral 28, constitutes a contour-correction-signal amplifier for digitally amplifying the contour correction signal.

Concerning a multiplication of amplification used by the contour-correction-signal amplifier 28, a multiplication of four times is acceptable. For practice, the multiplication is not less than one time, or is preferably not less than two times. More preferably, the multiplication is not less than four times.

This is because a multiplication of not less than two times provides preferable contour enhancement and a multiplication of four times provides preferable contour enhancement even in a low contrast image. For example, in the case where an image has only a cloud or wall as a background, it is difficult to perform contour enhancement due to low contrast. However, by increasing a multiplication of amplification to be four times or greater, preferable contour enhancement can be performed.

By applying the contour enhancement in the first embodiment to a liquid crystal panel for a viewfinder of a camera, a video signal is broad (time-based changes in the signal are gradual) when the camera lens is not focused, and the video signal is sharp (a time-based change in the signal is rapid) when the camera lens is focused. Therefore, large contour enhancement on video signal components corresponding to a portion of an image in focus is performed, which facilitates the focusing of the camera lens.

In the foregoing embodiments, the use of only digital signal processing enables contour enhancement without using components such as inductors and capacitors, whereby the need for performing electromagnetic shielding is eliminated. Since a multiplication of amplification can be increased by using digital processing, no analog signal oscillation occurs, differently from the case where the multiplication is increased by using analog processing. Thus, stable, strong contour enhancement can be performed. In addition, it is simply required that signal subtraction or addition and digital amplification be performed after generating a first-stage delay signal and a second-stage delay signal by using a clock signal characteristic in a television video signal system to which the present invention is applied. Thus, one type of delay line can be used differently from the case where a conventional analog contour correction circuit requires three or four types of delay line so as to be adapted for a television video signal system. Therefore, the cost can be reduced, and capacitors and coils used in a conventional circuit can be eliminated, which reduces the circuit size.

## Claims

1. An image display apparatus including a contour correction circuit comprising: first-stage delay means for generating a first-stage digital delay signal from an original digital signal; second delay means for generating a second-stage digital delay signal delayed from the first-stage delay signal; arithmetic means for generating a contour correction signal by subtracting the original signal from said first-stage digital delay signal while computing differences between the first-stage delay signal and the second-stage delay signal, and adding the differences; contour-correction-signal amplifier means for amplifying said contour correction signal; and combining means for combining the amplified contour correction signal with the first-stage delay signal.

2. An image display apparatus according to Claim 1, further including delay-adjustment means for determining delays by the first-stage and second-stage delay means by using a clock signal adapted for the type of an input video signal to be converted into the original signal.
